(19) Europäisches Patentamt European Patent Office Office européen des brevets

(11) **EP 4 471 082 A1**

(12) **EUROPEAN PATENT APPLICATION**
published in accordance with Art. 153(4) EPC

(43) Date of publication:
04.12.2024 Bulletin 2024/49

(21) Application number: 23747021.6

(22) Date of filing: 26.01.2023

(51) International Patent Classification (IPC):
$C08J\ 9/16^{(2006.01)}$ $C08J\ 3/24^{(2006.01)}$

(52) Cooperative Patent Classification (CPC):
C08J 3/24; C08J 9/16

(86) International application number:
PCT/JP2023/002405

(87) International publication number:
WO 2023/145811 (03.08.2023 Gazette 2023/31)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 28.01.2022 JP 2022011765

(71) Applicant: Sekisui Kasei Co., Ltd.
Kita-ku
Osaka-shi
Osaka 530-8565 (JP)

(72) Inventor: KUWABARA, Yusuke
Osaka-shi, Osaka 530-8565 (JP)

(74) Representative: Hoffmann Eitle
Patent- und Rechtsanwälte PartmbB
Arabellastraße 30
81925 München (DE)

(54) **AROMATIC POLYESTER-BASED RESIN FOAM PARTICLE AND METHOD FOR PRODUCING SAME, FOAM MOLDED ARTICLE, COMPOSITE STRUCTURAL MEMBER, AND VEHICLE MEMBER**

(57) An object of the present invention is to provide an aromatic polyester-based resin foam molded product having a small dimensional change rate at a high temperature. The present invention relates to the following inventions etc. Foamed aromatic polyester-based resin particles comprising polyethylene naphthalate and polyethylene terephthalate, the foamed particles having a $C_{3-6}$ aliphatic hydrocarbon content of 0 mass% or more and 0.50 mass% or less, a polyethylene naphthalate content of 1 mass% or more and 10 mass% or less, and a polyethylene terephthalate content of 90 mass% or more and 99 mass% or less.

Fig. 1

EP 4 471 082 A1

## Description

Technical Field

The present invention relates to foamed aromatic polyester-based resin particles obtained by foaming an aromatic polyester-based resin, and a method for producing the same. The present invention also relates to a foam molded product obtained by foaming the foamed aromatic polyester-based resin particles, and a composite structural component comprising the foam molded product. The present invention relates to an automobile component comprising the foam molded product or composite structural component.

Background Art

A general method conventionally used to produce an aromatic polyester-based resin foam molded product by foaming foamed particles made of an aromatic polyester-based resin is in-mold foam molding. In-mold foam molding is a molding method including, for example: a step of filling a mold with foamed resin particles; and a step of heating the foamed resin particles filled in the mold using a heating medium such as hot water or water vapor to secondary-foam the foamed resin particles, so that the obtained secondary foamed particles are heat-fused and integrated with each other, whereby an in-mold foam molded product having a desired shape is produced.

Further, it is reported that in order to add additional function to a foam molded product, for the purpose of, for example, improving the appearance of the foam molded product, a skin material, such as a film or prepreg, is closely attached to the surface of the foam molded product and heated to stack and integrate the skin material with the foam molded product, thereby producing a composite structural component (PTL 1 and PTL 2).

Citation List

Patent Literature

PTL 1: JP2014-080022A
PTL 2: JP2015-098587A

Summary of Invention

Technical Problem

In compounding, the foam molded product is required to have a low heating dimensional change rate at the compounding temperature. This is because if the heating dimensional change rate is high, the adhesion and unity between the skin material and the foam molded product are impaired by the variation in the dimensions of the foam molded product due to heating during the compounding treatment.

Since the heating temperatures for compounding conventional aromatic polyester-based resin foam molded products were relatively low, the heating dimensional change rates of foam molded products in PTL 1 and PTL 2 were measured at about 100°C and about 130°C, and were good values. However, in recent years, higher temperatures have been required for compounding.

Solution to Problem

The present inventors considered that providing an aromatic polyester-based resin foam molded product having a low heating dimensional change rate at a higher temperature would be promising for the production of composite structural components compounded at high temperatures. As a result of their investigations, the inventors found that the foam molded products of PTL 1 and PTL 2 had a high heating dimensional change rate at 200°C. The inventors also found that if the foamed aromatic polyester-based resin particles or foam molded product contains a large amount of aliphatic hydrocarbon, the foam molded product undergoes large dimensional changes at high temperatures (e.g., 180°C, 190°C, and 200°C), and is less suitable for compounding at high temperatures. Furthermore, the inventors found that even if the aromatic polyester-based resin foam molded product undergoes small dimensional changes at high temperatures, the mechanical properties (bending properties and compression properties), which should originally be possessed, may be reduced.

Based on these findings, the present inventors have achieved the production of a foam molded product having a low dimensional change rate at a high temperature by setting the amount of aliphatic hydrocarbon in the foamed particles or foam molded product to 0 mass% or more and below a certain level.

The present invention typically includes the following aspects.

Item 1.

Foamed aromatic polyester-based resin particles comprising polyethylene naphthalate and polyethylene terephthalate, the foamed particles having a $C_{3-6}$ aliphatic hydrocarbon content of 0 mass% or more and 0.50 mass% or less, a polyethylene naphthalate content of 1 mass% or more and 10 mass% or less, and a polyethylene terephthalate content of 90 mass% or more and 99 mass% or less.

Item 2.

A foam molded product of the foamed aromatic polyester-based resin particles according to Item 1.

Item 3.

The foam molded product according to Item 2, wherein the foam molded product has a $C_{3-6}$ aliphatic hydrocarbon content of 0 mass% or more and 0.25 mass% or less.

Item 4.

The foam molded product according to Item 2 or 3, which has a dimensional change rate of -1.3% or more and 1.3% or less when left in an atmosphere at 200°C for 120 minutes.

Item 5.

A composite structural component comprising the foam molded product according to any one of Items 3 to 5.

Item 6.

An automobile component comprising the foam molded product according to any one of Items 2 to 4, or the composite structural component according to Item 5.

Item 7.

A method for producing the foamed aromatic polyester-based resin particles according to Item 1, the method comprising the steps of:

supplying an aromatic polyester-based resin material comprising polyethylene naphthalate and polyethylene terephthalate to an extruder, and melt-kneading the aromatic polyester-based resin material in the presence of a foaming agent to prepare a melt-kneaded product;
extrusion-foaming the melt-kneaded product to prepare an extruded foam; and
cutting the extruded foam to prepare foamed particles, wherein the foaming agent comprises an inorganic gas in an amount of 0.05 parts by mass or more and 0.50 parts by mass or less and $C_{3-6}$ aliphatic hydrocarbon in an amount of 0 parts by mass or more and 0.50 parts by mass or less based on 100 parts by mass of the aromatic polyester-based resin material.

Item 8.

The method for producing the foamed aromatic polyester-based resin particles according to Item 7, wherein the aromatic polyester-based resin material comprises 1 mass% or more and 10 mass% or less of polyethylene naphthalate and 90 mass% or more and 99 mass% or less of polyethylene terephthalate.

Item 9.

The method for producing the foamed aromatic polyester-based resin particles according to Item 7 or 8, wherein a cross-linking agent is further supplied in the step of preparing a melt-kneaded product.

Item 10.

A method for producing a foam molded product, the method comprising:

a filling step of filling a cavity of a mold with the foamed aromatic polyester-based resin particles according to Item 1; and
a foaming step of secondary-foaming the foamed aromatic polyester-based resin particles by heating to integrate the foamed particles with each other by heat-fusion, thereby preparing a foam molded product.

Advantageous Effects of Invention

According to the present invention, it is possible to provide an aromatic polyester-based resin foam molded product having excellent heating dimensional stability at high temperatures and excellent mechanical properties (bending strength and compressive strength), foamed aromatic polyester-based resin particles useful for producing the same, and an automobile component comprising the foam molded product.
According to the present invention, it is also possible to provide a method for producing the foamed aromatic polyester-based resin particles.

Brief Description of Drawings

Fig. 1 is a schematic cross-sectional view illustrating an exemplary apparatus for producing foamed aromatic polyester-based resin particles.
Fig. 2 is a schematic front view of a multi-nozzle die.
Fig. 3 is a schematic diagram illustrating a foamed aromatic polyester-based resin particle entering cooling water.

Description of Embodiments

In the present specification, the terms "comprising" and "containing" are intended to include the terms "consisting essentially of" and "consisting of."
In the present specification, the phrase "0 mass% or more" includes 0 mass%. For example, the phrase "A is contained in an amount of 0 mass% or more and 10 mass% or less" includes the case where A is not contained, and the case where A is contained and its content is 10 mass% or less. The same applies to the phrase "0 parts by mass or more."

Foamed Aromatic Polyester-Based Resin Particles

The foamed aromatic polyester-based resin particles contain polyethylene naphthalate and polyethylene terephthalate as main ingredients. The "main ingredients" mean that the foamed aromatic polyester-based resin particles contain polyethylene naphthalate and polyethylene terephthalate in an amount of 80 mass% or more and 100 mass% or less based on the mass of the foamed particles.
Polyethylene naphthalate is generally a linear aromatic polyester obtained by condensation of ethylene glycol and naphthalenedicarboxylic acid or dimethyl naphthalate. Polyethylene naphthalate generally has a high molecular weight. For polyethylene naphthalate, naphthalenedicarboxylic acid and dimethyl naphthalate may both be used. Polyethylene naphthalates may be used singly or in combination of two or more.
2,6-Naphthalenedicarboxylic acid is often used as naphthalenedicarboxylic acid. Other naphthalenedicarboxylic acids include 2,7-naphthalenedicarboxylic acid, 1,5-naphthalenedicarboxylic acid, 1,6-naphthalenedicarboxylic acid, 1,7-naphthalenedicarboxylic acid, and the like.
Polyethylene naphthalate may contain a trihydric or higher polyhydric alcohol. Polyethylene naphthalate may contain a trihydric or higher polyhydric carboxylic acid. The contents of trihydric or higher polyhydric alcohol and trihydric or higher polyhydric carboxylic acid in polyethylene naphthalate are each preferably less. The contents of trihydric or higher polyhydric alcohol and trihydric or higher polyhydric carboxylic acid in 100 mol% of polyethylene naphthalate are each preferably less than 15 mol%.
Examples of trihydric or higher polyhydric alcohols include glycerin, pentaerythritol, and the like. Trihydric or higher polyhydric alcohols may be used singly or in combination of two or more.
Examples of trihydric or higher polyhydric carboxylic acids include trimellitic acid, pyromellitic acid, and the like. Trihydric or higher polyhydric carboxylic acids may be used singly or in combination of two or more.
The content of polyethylene naphthalate in the foamed aromatic polyester-based resin particles is preferably 1 mass% or more and 10 mass% or less, and more preferably 3 mass% or more and 8 mass% or less, based on the mass of the foamed particles, because the foam molded product has high heating dimensional stability at high temperatures and high mechanical properties.

Polyethylene terephthalate is generally a linear aromatic polyester obtained by condensation of ethylene glycol and terephthalic acid or dimethyl terephthalate. Polyethylene terephthalate generally has a high molecular weight. For polyethylene terephthalate, terephthalic acid and dimethyl terephthalate may both be used. Polyethylene terephthalates may be used singly or in combination of two or more.

Polyethylene terephthalate may contain a polyhydric alcohol. Polyethylene terephthalate may contain a polyhydric carboxylic acid. The contents of polyhydric alcohol and polyhydric carboxylic acid in 100 mol% of polyethylene terephthalate are each preferably less than 15 mol%.

Examples of polyhydric alcohols that may be contained in polyethylene terephthalate include the compounds listed as examples of trihydric polyhydric alcohols that may be contained in polyethylene naphthalate. Polyhydric alcohols may be used singly or in combination of two or more.

Examples of polyhydric carboxylic acids that may be contained in polyethylene terephthalate include the compounds listed as examples of trihydric carboxylic acids that may be contained in polyethylene naphthalate. Polyhydric carboxylic acids may be used singly or in combination of two or more.

The content of polyethylene terephthalate in the foamed aromatic polyester-based resin particles is preferably 90 mass% or more and 99 mass% or less, and more preferably 92 mass% or more and 97 mass% or less, based on the mass of the foamed particles, because the foam molded product has high heating dimensional stability at high temperatures and high mechanical properties.

The total content of polyethylene naphthalate and polyethylene terephthalate in the foamed aromatic polyester-based resin particles may be 80 mass% or more and 100 mass% or less based on the mass of the foamed particles, and is preferably 90 mass% or more and 100 mass% or less, and more preferably 91 mass% or more and 100 mass% or less, because the foam molded product has high heating dimensional stability at high temperatures and high mechanical properties.

The mass ratio of polyethylene naphthalate and polyethylene terephthalate in the foamed aromatic polyester-based resin particles is preferably 1:99 to 10:90, and more preferably 3:97 to 8:92, because the foam molded product has high heating dimensional stability at high temperatures and high mechanical properties.

The foamed aromatic polyester-based resin particles contain at least polyethylene naphthalate and polyethylene terephthalate as aromatic polyester-based resins, but may also contain other aromatic polyester-based resins. The content of other aromatic polyester-based resins in the foamed aromatic polyester-based resin particles may be 0 mass% or more and 9 mass% or less based on the mass of the foamed particles, preferably 0 mass% or more and 5 mass% or less, and more preferably 0 mass%; that is, other aromatic polyester-based resins are not contained.

Other aromatic polyester-based resins may be polyesters containing an aromatic dicarboxylic acid component and a diol component, and examples include polypropylene terephthalate, polybutylene terephthalate, polycyclohexane dimethylene terephthalate, polybutylene naphthalate, and the like.

Polyethylene naphthalate, polyethylene terephthalate, and other aromatic polyester-based resins may be not only petroleum-derived materials, but also plant-derived materials or recycled materials recovered and recycled from used PET bottles.

The aromatic polyester-based resin constituting the foamed aromatic polyester-based resin particles may be cross-linked with a cross-linking agent. A known cross-linking agent is used, and examples include dianhydrides such as pyromellitic anhydride, polyfunctional epoxy compounds, oxazoline compounds, and oxazine compounds. Cross-linking agents may be used singly or in combination of two or more.

The mass average molecular weight of polyethylene naphthalate and polyethylene terephthalate is preferably 45,000 or more and 130,000 or less, and more preferably 60,000 or more and 120,000 or less, in terms of excellent extrusion foaming properties and the excellent secondary foaming properties of the obtained foamed particles.

The foamed aromatic polyester-based resin particles may contain $C_{3-6}$ aliphatic hydrocarbon, and the content thereof based on the mass of the foamed particles is 0 mass% or more and 0.50 mass% or less, preferably 0 mass% or more and 0.40 mass% or less, more preferably 0 mass% or more and 0.35 mass% or less, even more preferably 0 mass% or more and 0.20 mass% or less, and particularly preferably 0 mass%; that is, $C_{3-6}$ aliphatic hydrocarbon is not contained. The content of $C_{3-6}$ aliphatic hydrocarbon in the foamed particles can be identified by using a gas chromatograph. Examples of $C_{3-6}$ aliphatic hydrocarbon include propane, n-butane, isobutane, isopentane, and hexane; and preferably n-butane and isobutane.

The bulk density of the foamed aromatic polyester-based resin particles is preferably 0.05 g/cm$^3$ or more and 0.7 g/cm$^3$ or less, more preferably 0.07 g/cm$^3$ or more and 0.6 g/cm$^3$ or less, and particularly preferably 0.08 g/cm$^3$ or more and 0.5 g/cm$^3$ or less, in terms of improving foaming power and improving the fusion power of the secondary foamed particles. The bulk density of the foamed aromatic polyester-based resin particles can be controlled by adjusting the pressure of the resin at the outlet ports 11 of the nozzles of the nozzle die 1, the amount of the foaming agent, etc. The pressure of the resin at the outlet ports 11 of the nozzles of the nozzle die 1 can be controlled by adjusting the diameter of the nozzles, the rate of extrusion, and the melt viscosity of the aromatic polyester-based resin. The bulk density of the foamed aromatic polyester-based resin particles is a value measured according to JIS K6911: 1995 "Testing methods for thermosetting plastics." Specifically, the bulk density is determined by the method described in the Examples.

The crystallinity of the foamed aromatic polyester-based resin particles is preferably less than 15%, and more preferably 10% or less, in terms of improving the fusion power of the secondary foamed particles. The crystallinity of the foamed aromatic polyester-based resin particles is determined by the methods described in JIS K7122: 1987 and JIS K7122: 2012. Specifically, the crystallinity of the foamed particles is determined by the method described in the Examples.

The foamed aromatic polyester-based resin particles can be in-mold foam molded to produce an aromatic polyester-based resin foam molded product having a small heating dimensional change at a high temperature of 200°C (high heating dimensional stability at a high temperature) and excellent bending strength and compressive strength. Since this foam molded product has a small heating dimensional change at a high temperature, it is suitable for use as a core of a composite structural component composed of a skin material and the core, in addition to the conventional use of aromatic polyester-based resins. In particular, it is useful as a core of a composite structural component that requires a compounding process at a high temperature.

Method for Producing Foamed Aromatic Polyester-Based Resin Particles

The foamed particles of the present invention can be produced by a method comprising, for example, supplying an aromatic polyester-based resin material containing polyethylene naphthalate and polyethylene terephthalate, and optionally a cross-linking agent to an extruder, melt-kneading the mixture in the presence of a foaming agent to prepare a melt-kneaded product, extrusion-foaming the melt-kneaded product to prepare an extruded foam, and cutting the extruded foam to prepare a foamed particles. These steps can basically be carried out by applying known methods. The foaming agent comprises an inorganic gas in an amount of 0.05 parts by mass or more and 0.50 parts by mass or less and $C_{3-6}$ aliphatic hydrocarbon in an amount of 0 parts by mass or more and 0.50 parts by mass or less, based on 100 parts by mass of the aromatic polyester-based resin material.

The content of polyethylene naphthalate and polyethylene terephthalate in the aromatic polyester-based resin material may be 80 mass% or more and 100 mass% or less, preferably 90 mass% or more and 100 mass% or less, and more preferably 91 mass% or more and 100 mass% or less, based on the mass of the aromatic polyester-based resin material.

The content of polyethylene terephthalate in the aromatic polyester-based resin material is preferably 90 mass% or more and 99 mass% or less, and more preferably 92 mass% or more and 97 mass% or less, based on the mass of the aromatic polyester-based resin material.

The content of polyethylene naphthalate in the aromatic polyester-based resin material is preferably 1 mass% or more and 10 mass% or less, and more preferably 3 mass% or more and 8 mass% or less, based on the mass of the aromatic polyester-based resin material.

The mass ratio of polyethylene naphthalate and polyethylene terephthalate in the aromatic polyester-based resin material is preferably 1:99 to 10:90, and more preferably 3:97 to 8:92. The description relating to polyethylene naphthalate and polyethylene terephthalate in the section "Foamed Aromatic Polyester-Based Resin Particles" can also be applied to polyethylene naphthalate and polyethylene terephthalate in the method for producing foamed aromatic polyester-based resin particles.

The aromatic polyester-based resin material may contain other aromatic polyester-based resins. The content of other aromatic polyester-based resins in the aromatic polyester-based resin material may be 0 mass% or more and 9 mass% or less based on the mass of the aromatic polyester-based resin material, preferably 0 mass% or more and 5 mass% or less, and more preferably 0 mass%; that is, other aromatic polyester-based resins are not contained. The description relating to other aromatic polyester-based resins in the section "Foamed Aromatic Polyester-Based Resin Particles" can also be applied to other aromatic polyester-based resins in the method for producing foamed aromatic polyester-based resin particles.

Cross-linking can be performed by a known method. For example, an aromatic polyester-based resin material and a cross-linking agent are supplied to an extruder and kneaded in the extruder, whereby the aromatic polyester-based resin can be cross-linked with the cross-linking agent. The amount of the cross-linking agent supplied to the extruder is preferably 0.01 parts by mass or more and 5 parts by mass or less, and more preferably 0.1 parts by mass or more and 1 part by mass or less, based on 100 parts by mass of the aromatic polyester-based resin material, in terms of performing extrusion foaming well. The description relating to the cross-linking agent in the section "Foamed Aromatic Polyester-Based Resin Particles" can also be applied to the cross-linking agent in the method for producing foamed aromatic polyester-based resin particles.

The foaming agent is preferably an inorganic gas, such as carbon dioxide, nitrogen, or air. Inorganic gases may be used singly or in combination of two or more. The amount of inorganic gas used may be 0.05 parts by mass or more and 0.50 parts by mass or less, and more preferably 0.05 parts by mass or more and 0.40 parts by mass or less, based on 100 parts by mass of the aromatic polyester-based resin material, in terms of being able to impart the foaming power required for foam molding to the foamed particles and enhancing the heating dimensional stability of the foam molded product at high temperatures.

As the foaming agent, an inorganic gas can be used in combination with a small amount of $C_{3-6}$ aliphatic hydrocarbon. In terms of enhancing the heating dimensional stability of the foam molded product at high temperatures, the amount of $C_{3-6}$ aliphatic hydrocarbon used based on 100 parts by mass of the aromatic polyester-based resin material is preferably 0 mass% or more and 0.50 mass% or less, more preferably 0 mass% or more and 0.40 mass% or less, even more preferably 0 mass% or more and 0.20 mass% or less, and particularly preferably 0 mass%; that is, $C_{3-6}$ aliphatic hydrocarbon is not used. The description relating to $C_{3-6}$ aliphatic hydrocarbon in the section "Foamed Aromatic Polyester-Based Resin Particles" can also be applied to $C_{3-6}$ aliphatic hydrocarbon in the method for producing foamed aromatic polyester-based resin particles.

A cell regulator may also be supplied to the extruder. The cell regulator is preferably polytetrafluoroethylene powder, polytetrafluoroethylene powder modified by an acrylic resin, talc, etc., and more preferably talc.

The amount of the cell regulator supplied to the extruder is preferably 0.01 parts by mass or more and 5 parts by mass or less, more preferably 0.05 parts by mass or more and 3 parts by mass or less, and particularly preferably 0.1 parts by mass or more and 2 parts by mass, based on 100 parts by mass of the aromatic polyester-based resin material.

Preferably, the foamed aromatic polyester-based resin particles are produced by extrusion foaming. For example, the aromatic polyester-based resin material is supplied to the extruder and melt-kneaded in the presence of a foaming agent. Then, while the extrudates of the aromatic polyester-based resin are extrusion-foamed from the nozzle die attached to the front end of the extruder, the extrudates are cut by the rotary blades to thereby produce the foamed aromatic polyester-based resin particles.

No particular limitation is imposed on the extruder as long as it is a conventionally used general extruder. Examples of such an extruder include a single-screw extruder, a twin-screw extruder, and a tandem extruder including a plurality of connected extruders.

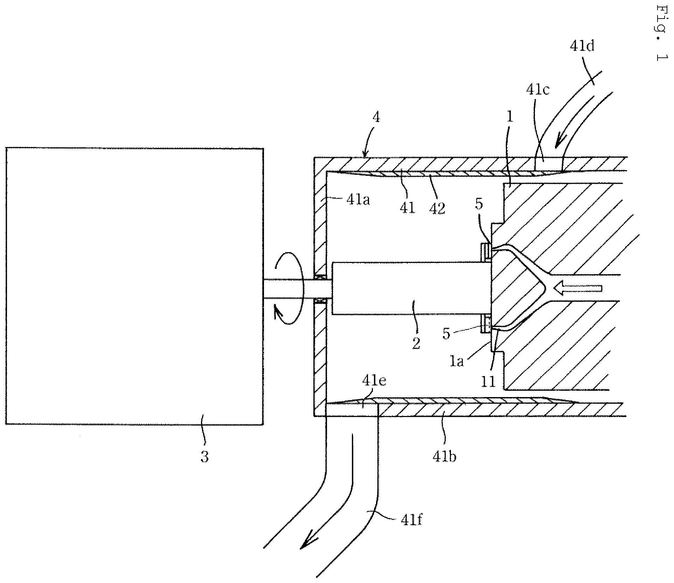

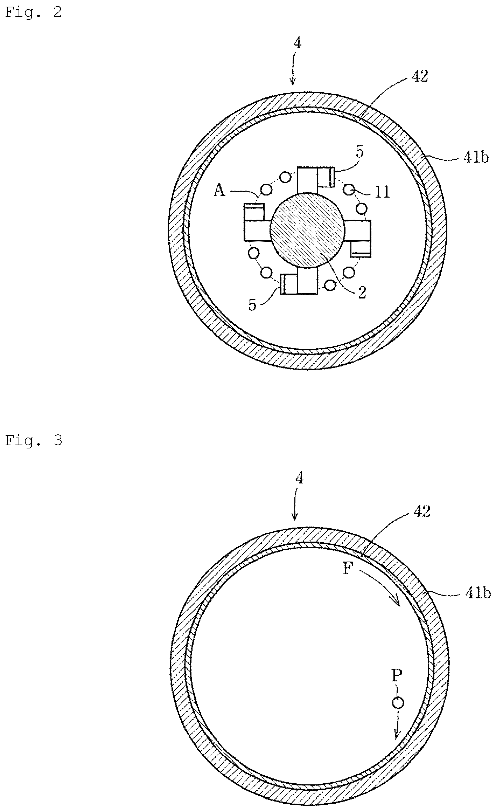

A description will be given of an exemplary production apparatus used to produce the foamed aromatic polyester-based resin particles. In Fig. 1, a nozzle die 1 is attached to the front end of an extruder. The nozzle die 1 is preferred because the aromatic polyester-based resin can be extrusion-foamed to form uniform fine cells. As shown in Fig. 2, a plurality of outlet ports 11 are formed on a front end face 1a of the nozzle die 2 at regular intervals on a single virtual circle A. No particular limitation is imposed on the nozzle die attached to the front end of the extruder, as long as the aromatic polyester-based resin is not foamed within the nozzles.

The number of nozzles of the nozzle die 1 is preferably 8 to 50, more preferably 5 to 60, and particularly preferably 8 to 50. The diameter of the outlet ports 11 of the nozzles of the nozzle die 1 is preferably 0.2 to 2 mm, more preferably 0.3 to 1.6 mm, and particularly preferably 0.4 to 1.2 mm. The length of a land section of the nozzle die 1 is 1.5 to 30 times, and more preferably 2 to 20 times the diameter of the outlet ports 11 of the nozzles of the nozzle die 1.

A rotation shaft 2 is disposed in a portion surrounded by the outlet ports 11 of the nozzles at the front end face 1a of the nozzle die 1 so as to protrude forward. The rotation shaft 2 passes through a front section 41a of a cooling drum 41 constituting a cooling component 4 described later and is connected to a driving component 3 such as a motor.

In addition, one or a plurality of rotary blades 5 are disposed integrally with the outer circumferential surface of the rear end portion of the rotation shaft 2. When the rotary blades 5 rotate, all the rotary blades 5 are always in contact with the front end face 1a of the nozzle die 1. When a plurality of rotary blades 5 are disposed integrally with the rotation shaft 2, the plurality of rotary blades 5 are arranged at regular intervals in the circumferential direction of the rotation shaft 2. In the example shown in Fig. 2, four rotary blades 5 are disposed integrally with the outer circumferential surface of the rotation shaft 2.

In this configuration, when the rotation shaft 2 rotates, the rotary blades 5 move on the virtual circle A on which the outlet ports 11 of the nozzles are formed while being always in contact with the front end face 1a of the nozzle die 1, so that the rotary blades 5 are capable of sequentially and continuously cutting the extrudates of the aromatic polyester-based resin extruded from the outlet ports 11 of the nozzles.

The cooling component 4 is disposed so as to surround the rotation shaft 2 and at least the front end portion of the nozzle die 1. The cooling component 4 includes a closed-end tubular cooling drum 41 including: a front section 41a having a circular front shape with a diameter larger than the diameter of the nozzle die 1; and a tubular circumferential wall section 41b extending rearward from the outer circumferential edge of the front section 41a.

A supply port 41c for supplying cooling water 42 is formed in a portion of the circumferential wall section 41b of the cooling drum 41 that corresponds to the exterior of the nozzle die 1 so as to pass through the inner and outer circumferential surfaces of the circumferential wall section 41b. A supply tube 41d for supplying the cooling water 42 to the cooling drum 41 is connected to the outer opening of the supply port 41c of the cooling drum 41.

In this configuration, the cooling water 42 is supplied, through the supply tube 41d, obliquely forward along the inner circumferential surface of the circumferential wall section 41b of the cooling drum 41. Then, the cooling water 42 flows forward while the cooling water 42 is caused to describe a helix along the inner circumferential surface of the circumferential wall section 41b of the cooling drum 41 by the centrifugal force caused by the flow rate of the cooling water 42 when it is supplied from the supply tube 41d to the inner circumferential surface of the circumferential wall section 41b of the cooling drum 41. In this configuration, while flowing along the inner circumferential surface of the circumferential wall section 41b, the cooling water 42 spreads gradually in a direction perpendicular to its flowing direction, so that the portion of the inner circumferential surface of the circumferential wall section 41b that is frontward of the supply port 41c of the cooling drum 41 is entirely covered with the cooling water 42.

A discharge port 41e is formed on the lower surface of the front end portion of the circumferential wall section 41b of the cooling drum 41 so as to pass through the inner and outer circumferential surfaces of the circumferential wall section 41b. A discharge tube 41f is connected to the outer opening of the discharge port 41e. In this configuration, the foamed aromatic polyester-based resin particles and the cooling water 42 are continuously discharged through the discharge port 41e.

The extrudates of the aromatic polyester-based resin extrusion-foamed through the nozzle die 1 are subjected to the cutting step. The extrudates of the aromatic polyester-based resin are cut by rotating the rotary blades 5 disposed on the front end face 1a of the nozzle die 1 by means of the rotation of the rotation shaft 2. The rotation speed of the rotary blades 5 is preferably 2,000 rpm or more and 10,000 rpm or less. Preferably, the rotary blades are rotated at constant speed.

The rotary blades 5 rotate while all the rotary blades 5 are always in contact with the front end face 1a of the nozzle die 1. The extrudates of the aromatic polyester-based resin extrusion-foamed through the nozzle die 1 are cut in the air at regular time intervals by shear stress generated between the rotary blades 5 and the edges of the outlet ports 11 of the nozzles of the nozzle die 1, whereby particle-shaped cut products are produced.

The aromatic polyester-based resin is prevented from being foamed within the nozzles of the nozzle die 1. The aromatic polyester-based resin remains unfoamed immediately after ejected from the outlet ports 11 of the nozzles of the nozzle die 1 and starts foaming a short time after ejection. Therefore, the extrudates of the aromatic polyester-based resin include unfoamed portions formed immediately after ejection from the outlet ports 11 of the nozzles of the nozzle die 1 and foamed portions that are continuous with the unfoamed portions, extruded ahead of the unfoamed portions, and being foamed.

The unfoamed portions maintain their state from ejection from the outlet ports 11 of the nozzles of the nozzle die 1 until they start foaming. The time during which the unfoamed portions are maintained can be controlled by adjusting the pressure of the resin at the outlet ports 11 of the nozzles of the nozzle die 1, the amount of the foaming agent, etc. If the pressure of the resin at the outlet ports 11 of the nozzles of the nozzle die 1 is high, the extrudates of the aromatic polyester-based resin are not foamed immediately after extrusion from the nozzle die 1 and maintain the unfoamed state. The pressure of the resin at the outlet ports 11 of the nozzles of the nozzle die 1 can be controlled by adjusting the diameter of the nozzles, the rate of extrusion, the melt viscosity of the aromatic polyester-based resin, and its melt tension. By adjusting the amount of the foaming agent to a proper amount, the aromatic polyester-based resin is prevented from being foamed within the die, so that the unfoamed portions can be formed in a reliable manner.

Since the rotary blades 5 cut the extrudates of the aromatic polyester-based resin while all the rotary blades 5 are always in contact with the front end face 1a of the nozzle die 1, the extrudates of the aromatic polyester-based resin are cut at the unfoamed portions formed immediately after ejection from the outlet ports 11 of the nozzles of the nozzle die 1, whereby particle-shaped cut products are produced.

As described above, the rotary blades 5 rotate at a constant rotation speed. The rotation speed of the rotary blades 5 is preferably 2,000 rpm or more and 10,000 rpm or less, more preferably 2,000 rpm or more and 9,000 rpm or less, and particularly preferably 2,000 rpm or more and 8,000 rpm or less. When the rotation speed is within the above range, it is advantageous in that cutting reliability is enhanced, or in that the coalescence of particle-shaped cut products can be suppressed.

The cutting stress by the rotary blades 5 causes the particle-shaped cut products obtained as described above to fly toward the cooling drum 41 at the same time when they are cut, and then the particle-shaped cut products immediately collide with the cooling water 42 that covers the inner circumferential surface of the circumferential wall section 41b of the cooling drum 41. The particle-shaped cut products continue foaming until they collide with the cooling water 42, and the foaming causes the particle-shaped cut products to grow into a substantially spherical shape. Therefore, the obtained foamed aromatic polyester-based resin particles are substantially spherical. The foamed aromatic polyester-based resin particles can be easily filled into a mold. Therefore, when the mold is filled with the foamed aromatic polyester-based resin particles to perform in-mold foaming, the foamed aromatic polyester-based resin particles can be uniformly filled into the mold, so that a uniform in-mold foam molded product can be obtained.

Since the particle-shaped cut products are cooled by the cooling water 42 immediately after the extrudates of the aromatic polyester-based resin are cut by the rotary blades 5 as described above, the foamed aromatic polyester-based resin particles are prevented from being foamed excessively. As described above, the cooling water 42 flowing along the inner circumferential surface of the circumferential wall section 41b of the cooling drum 41 flows while turning helically.

Therefore, it is preferable that the particle-shaped cut products P be allowed to collide with the cooling water 42 in a direction oblique to the surface of the cooling water 42 from the upstream side of the flow of the cooling water 42 toward the downstream side and then to enter the cooling water 42. In Fig. 3, the direction of the flow of the cooling water is denoted by "F."

As an example of the method for producing thermoplastic resin foamed particles, the above explains a method using the production apparatus shown in Figs. 1 to 3; however, the method for producing thermoplastic resin foamed particles is not limited to this example. For example, the following methods can also be used: (1) a method in which a thermoplastic resin is supplied to an extruder and melt-kneaded in the presence of a foaming agent, the resin is extrusion-foamed from a nozzle die attached to the front end of the extruder to produce stranded extrudates of the thermoplastic resin, and the stranded extrudates of the thermoplastic resin are cooled and then cut into particles using a pelletizer or the like to produce thermoplastic resin foamed particles; (2) a method in which a thermoplastic resin is supplied to an extruder and melt-kneaded in the presence of a foaming agent, a thermoplastic resin foam sheet is produced from a T-die attached to the front end of the extruder, and the thermoplastic resin foam sheet is cooled and then cut into thermoplastic resin foamed particles; and (3) a method in which a thermoplastic resin is supplied to an extruder and melt-kneaded in the presence of a foaming agent, circular extrudates of the thermoplastic resin are produced from a circular die attached to the front end of the extruder, the circular extrudates of the thermoplastic resin are continuously cut in the extrusion direction through the inner and outer circumferential surfaces, the circular extrudates of the thermoplastic resin are expanded to produce a thermoplastic resin foam sheet, and the thermoplastic resin foam sheet is cut into particles to produce thermoplastic resin foamed particles. These methods are known.

Method for Producing Aromatic Polyester-Based Resin Foam Molded Product

The aromatic polyester-based resin foam molded product of the present invention can be typically produced by in-mold foam molding the aromatic polyester-based resin of the present invention in a known manner. For example, by filling a cavity of a mold with the foamed aromatic polyester-based resin particles and heating the foamed aromatic polyester-based resin particles to foam them, the secondary foamed particles obtained by foaming the foamed aromatic polyester-based resin particles are heat-fused and integrated with each other through their foaming pressure, whereby a foam molded product having a low heating dimensional change rate at a high temperature and excellent mechanical properties and also having a desired shape can be obtained. No particular limitation is imposed on a heating medium for the foamed aromatic polyester-based resin particles filled into the mold, and examples of the heating medium include, in addition to water vapor, hot air and warm water.

Aromatic Polyester-Based Resin Foam Molded Product

The aromatic polyester-based resin foam molded product is a foam composed of a fused body of the foamed aromatic polyester-based resin particles of the present invention, and can be typically produced by in-mold foam molding the foamed particles. Therefore, the matters stated in the section of the foamed aromatic polyester-based resin particles and the method for producing the same can be applied to the aromatic polyester-based resin foam molded product and the method for producing the same. For example, the matters, such as type, content, and physical properties, relating to the aromatic polyester-based resin, cross-linking agent, $C_{3-6}$ aliphatic hydrocarbon, etc. stated in the section of the foamed aromatic polyester-based resin particles and the method for producing the same can be applied to the aromatic polyester-based resin foam molded product and the method for producing the same.

The aromatic polyester-based resin foam molded product may contain $C_{3-6}$ aliphatic hydrocarbon, and the content thereof based on the mass of the foam molded product may be 0 mass% or more and 0.25 mass% or less, preferably 0 mass% or more and 0.20 mass% or less, more preferably 0 mass% or more and 0.15 mass% or less, even more preferably 0 mass% or more and 0.10 mass% or less, and particularly preferably 0 mass%; that is, $C_{3-6}$ aliphatic hydrocarbon is not contained. The content of $C_{3-6}$ aliphatic hydrocarbon in the foam molded product can be identified by using a gas chromatograph. The content of $C_{3-6}$ aliphatic hydrocarbon in the foam molded product produced from the foamed aromatic polyester-based resin particles is empirically almost half of the content of $C_{3-6}$ aliphatic hydrocarbon in the foamed aromatic polyester-based resin particles. For example, in Example 4, the butane content of the foamed particles is 0.15 mass%, and the butane content of the foam molded product is 0.07 mass%.

The density of the aromatic polyester-based resin foam molded product is preferably 0.05 g/cm³ or more and 0.7 g/cm³ or less, more preferably 0.07 g/cm³ or more and 0.6 g/cm³ or less, and particularly preferably 0.08 g/cm³ or more and 0.5 g/cm³ or less, in terms of light weight and mechanical strength. The mass (a) and volume (b) of a rectangular parallelepiped test piece (e.g., 75 mm × 300 mm × 30 mm) cut out from a foam molded product dried at 55°C for 20 hours or more after molding are measured to three or more significant digits, and the density of the foam molded product is determined by the formula (a)/(b). Specifically, the density is determined by the method described in the Examples.

When the aromatic polyester-based resin foam molded product is allowed to stand in an atmosphere of 200°C for 120 minutes, its heating dimensional change rate is low. The heating dimensional change rate is preferably -1.3% or more and 1.3% or less, more preferably -1.0% or more and 1.0% or less, and even more preferably -0.8% or more and 0.8% or less. The heating dimensional change rate is determined by the method described as Method B in JIS K 6767: 1999 "Cellular plastics - Polyethylene - Methods of test." Specifically, the heating dimensional change rate is determined by the method described in the Examples.

The aromatic polyester-based resin foam molded product has high maximum bending strength. The maximum bending strength may be 1.40 MPa or more, preferably 1.50 MPa or more, more preferably 1.60 MPa or more, and even more preferably 1.70 MPa or more. The upper limit of the maximum bending strength is not particularly limited, but may be 3.00 MPa or less, 2.50 MPa or less, 2.00 MPa or less, or the like. The maximum bending strength may be 1.40 MPa or more and 3.00 MPa or less, 1.40 MPa or more and 2.50 MPa or less, 1.40 MPa or more and 2.00 MPa or less, 1.50 MPa or more and 3.00 MPa or less, 1.50 MPa or more and 2.50 MPa or less, 1.50 MPa or more and 2.00 MPa or less, 1.60 MPa or more and 3.00 MPa or less, 1.60 MPa or more and 2.50 MPa or less, 1.60 MPa or more and 2.00 MPa or less, 1.70 MPa or more and 3.00 MPa or less, 1.70 MPa or more and 2.50 MPa or less, 1.70 MPa or more and 2.00 MPa or less, or the like. The maximum bending strength is determined by the method according to JIS K7221-1: 2006. Specifically, the maximum bending strength is determined by the method described in the Examples.

The aromatic polyester-based resin foam molded product has high 5% compressive strength. The 5% compressive strength may be, for example, 0.90 MPa or more, and preferably 1.00 MPa or more. The upper limit of the 5% compressive strength is not particularly limited, but may be 2.00 MPa or less, 1.50 MPa or less, 1.30 MPa or less, or the like. The 5% compressive strength may be 0.90 MPa or more and 2.00 MPa or less, 0.90 MPa or more and 1.50 MPa or less, 0.90 MPa or more and 1.30 MPa or less, 1.00 MPa or more and 2.00 MPa or less, 1.00 MPa or more and 1.50 MPa or less, 1.00 MPa or more and 1.30 MPa or less, or the like. The 5% compressive strength is determined by the method according to JIS K6767: 1999. Specifically, the 5% compressive strength is determined by the method described in the Examples.

Since the aromatic polyester-based resin foam molded product has a small heating dimensional change at a high temperature, it is suitable for use as a core of a composite structural component composed of a skin material and the core, in addition to the conventional use of aromatic polyester-based resin foam molded products. In particular, it is useful as a core of a composite structural component that requires a compounding process at a high temperature. The details of the composite structural component will be described later. Of the conventional use, the aromatic polyester-based resin foam molded product is suitable for automobile components.

Composite Structural Component

A composite structural component can be produced by using the aromatic polyester-based resin foam molded product as a core, stacking a skin material on the surface of the foam molded product, and integrating the skin material therewith. The composite structural component including the foam molded product and the skin material stacked on and integrated with the surface of the foam molded product is also an aspect of the present invention.

As described above, the foam molded product has a low heating dimensional change rate at a high temperature and high mechanical properties (maximum bending strength and 5% compressive strength). Therefore, the foam molded product is suitable for the production of composite structural components produced through a compounding process (high-temperature compounding) that requires heat treatment at a high temperature, e.g., 180°C or higher, 190°C or higher, or 200°C or higher. In other words, the foam molded product is suitable for use as a core for high-temperature compounding. On the other hand, the foam molded product can also be used as a core for the production of composite structural components produced through a compounding process that requires heat treatment at lower than 180°C. The high temperature may be 180°C or higher and 300°C or lower, 180°C or higher and 250°C or lower, 190°C or higher and 300°C or lower, 190°C or higher and 250°C or lower, 200°C or higher and 300°C or lower, 200°C or higher and 250°C or lower, or the like.

The thickness of the foam molded product used as the core of the composite structural component is preferably 1 mm to 40 mm in terms of strength, weight, and shock resistance.

The skin material is mainly used to protect the surface of the foam molded product, and to obtain even better properties that cannot be obtained from the foam molded product alone. The use of the skin material can further increase heat resistance and mechanical strength. The skin material may be stacked on the entire surface or part of the surface of the foam molded product.

Examples of the skin material include fiber-reinforced materials, metal sheets, resin films, and the like. Preferred among these are fiber-reinforced materials.

The fibers constituting the fiber-reinforced material are not particularly limited, and examples include carbon fiber, glass fiber, aramid fiber, boron fiber, metal fiber, and the like. In terms of excellent heat resistance and mechanical strength, preferred is carbon fiber, glass fiber, or aramid fiber, and more preferred is carbon fiber. The fiber-reinforced material may be impregnated with a thermosetting resin or a thermoplastic resin. That is, the skin material may be a prepreg.

The thermosetting resin is not particularly limited, and examples include epoxy resin, unsaturated polyester resin, phenolic resin, melamine resin, polyurethane resin, silicon resin, maleimide resin, vinyl ester resin, cyanate ester resin, and resin obtained by prepolymerizing maleimide resin and cyanate ester resin. Preferred is epoxy resin or vinyl ester resin in terms of excellent heat resistance, elastic modulus, and chemical resistance. Thermosetting resins may be used singly or in combination of two or more.

The thermoplastic resin is not particularly limited, and examples include polyolefin-based resin, polyester-based resin, thermoplastic epoxy resin, polyamide-based resin, thermoplastic polyurethane resin, sulfide-based resin, acrylic resin, and the like. Preferred is polyester-based resin or thermoplastic epoxy resin in terms of excellent adhesion between the skin material and the foam molded product, or between the fibers constituting the fiber-reinforced material. Thermoplastic resins may be used singly or in combination of two or more.

The metal sheet is not particularly limited, and examples include aluminum sheets, stainless steel sheets, iron sheets, steel sheets, titanium sheets, and the like. Aluminum sheets are preferred because they are excellent in both light weight and mechanical strength. Aluminum sheets include aluminum alloy sheets containing 50% by weight or more of aluminum.

The resin film is not particularly limited, and examples include polyolefin-based resin films, polyester-based resin films, acrylic resin films, and the like. Examples of polyolefin-based resin films include polyethylene-based resin films, polypropylene-based resin films, and the like. Examples of the polyester-based resin film include polyethylene terephthalate films.

The skin material is preferably stacked on and integrated with the foam molded product. The method for stacking the skin material on the surface of the foam molded product and integrating the skin material therewith is not particularly limited. For example, the following methods can be used: (1) a method in which the skin material is stacked on and integrated with the surface of the foam molded product through an adhesive; (2) a method in which a fiber-reinforced material impregnated with a thermoplastic resin is stacked on the surface of the foam molded product, and the fiber-reinforced material is stacked on and integrated with the surface of the foam molded product using the thermoplastic resin impregnated into the fiber-reinforced material as a binder; (3) a method in which a fiber-reinforced material impregnated with an uncured thermosetting resin is stacked on the surface of the foam molded product, and the thermosetting resin impregnated into the fiber-reinforced material is used as a binder and cured so that the fiber-reinforced material is stacked on and integrated with the surface of the foam molded product; (4) a method in which the skin material in a heated and softened state is placed on the surface of the foam molded product, and the skin material is pressed against the surface of the foam molded product, so that the skin material is deformed along the surface of the foam molded product as necessary, and stacked on and integrated with the surface of the foam molded product; and (5) other methods generally used in molding fiber-reinforced resin sheets. Examples include an autoclave method, a hand lay-up method, a spray-up method, a prepreg compression molding (PCM) method, a resin transfer molding (RTM) method, a vacuum-assisted resin transfer molding (VaRTM) method, and the like. Since the foam molded product has a low heating dimensional change rate in a high-temperature environment, the method (3) or (4) above can be suitably used.

In addition to light weight, sound insulation, heat insulation, vibration damping properties, and other properties inherent in the foam molded product, various functions (heat resistance, abrasion resistance, scratch resistance, beautiful appearance, chemical resistance, water resistance, oil resistance, stain resistance, etc.) can be imparted to the composite structural component by integration with the skin material. Therefore, in addition to the conventional use of aromatic polyester-based resin foam molded products, the composite structural component can be used in the fields of architecture, transportation equipment (automobiles, motorcycles, buses, trains, aircraft, ships, etc.), aerospace, energy technology (e.g., wind turbine rotor blades), sports (various exercise equipment etc.), electrical industry, and electronics industry. Examples include aircraft equipment structures (helicopter blades etc.), interior and exterior materials for various vehicles, materials for sports goods, materials for leisure goods, materials for sandwich structures, blades for wind power generation, and the like. Examples of automobile components include door panels, door inners, bumpers, fenders, fender supports, engine covers, roof panels, trunk lids, floor panels, instrument panels, center clusters, center tunnels, crash boxes, and the like. For example, when the composite structural component is used for door panels, which have been conventionally made of steel plates, the door panels with almost the same rigidity as the door panels made of steel plates can be greatly reduced in weight, and heat insulation, sound insulation, etc. are improved.

The composite structural component is preferably produced through a high-temperature compounding process because it can utilize the effect of the low heating dimensional change rate at a high temperature of the aromatic polyester-based resin foam molded product.

Automobile components include composite structural components in which foam molded components made of resin foam molded products are attached to metal or FRP components (e.g., steel plates) for use in vehicles. Examples include door panels, roof panels, engine covers, engines, brakes, and the like. When painting such automobile components (e.g., undercoat painting and finish painting), it was not possible to paint the metal or FRP components and the foam molded components in an assembled state due to the low heat resistance of the foam molded components. For this reason, the metal or FRP components and the foam molded components were each painted in different processes with paint and under conditions appropriate to their heat resistance, and resin components were then assembled to the metal components.

Since the aromatic polyester-based resin foam molded product has a low heating dimensional change rate at a high temperature, the use as a core of such a composite structural component makes it possible to paint metal or FRP components and foam molded components in an assembled state. For example, for steel plate components, in terms of corrosion resistance, steel plates are baked and painted. In bake painting, the applied coating (e.g., thermosetting resin) is baked and dried. Drying is carried out by using drying equipment, such as an electric hot air dryer or a gas hot air dryer, to keep the temperature of the coated surface at about 110 to 200°C. For this reason, the foam molded components attached to the steel plates to be baked and painted are required to have a low heating dimensional change rate at 200°C. Since the aromatic polyester-based resin foam molded product has a low heating dimensional change rate at a high temperature, it is possible to bake and paint it in assembled state with the steel plate component to be baked and painted. Thus, the aromatic polyester-based resin foam molded product is useful as a foam molded component that is assembled with a steel plate component to be baked and painted. A method for producing an automobile component comprising baking and painting a steel plate assembled with a foam molded product is also an aspect of the present invention.

An embodiment of the present invention will be described in more detail below with reference to Examples and the like; however, the present invention is not limited thereto.

The methods for specifying various physical properties and the like in the Examples etc. are described below.

Aliphatic Hydrocarbon Content

The amount of butane gas remaining in foamed particles and foam molded products was measured using a gas chromatograph. 10 to 30 mg of a sample was placed in a 20 mL vial bottle and precisely weighed. The vial bottle was sealed and placed in a gas chromatograph equipped with an autosampler, and heated at 210°C for 20 minutes. The gas in the space above the heated vial bottle was collected and quantitatively analyzed by the multiple headspace extraction (MHE) method. The MHE method mentioned herein is a quantitative method that utilizes the attenuation of the peak area obtained by repeatedly releasing a gas phase gas in gas-solid equilibrium.

Detailed conditions are shown below.

GC measurement conditions

Measurement equipment: Clarus 680 Gas Chromatograph produced by Perkin-Elmer
Column: ZB-1 produced by Phenomenex (1.0 $\mu$m × 0.25 mm diameter × 60 m)
Detector: FID (GC oven heating conditions)
Initial temperature: 50°C (held for 6 min)
Heating rate: 40°C/min (up to 250°C)
Final temperature: 250°C (held for 1.5 min)
Carrier gas: He
Inlet temperature: 230°C
Detection temperature: 310°C
Range: 20
Vent gas: 30 mL/min (He)
Additional gas: 5 mL/min (He)
Gas pressure: initial pressure 18 Psi (10 min)
Pressure increase rate: 0.5 Psi/min (up to 24 Psi)

HS measurement conditions

Measurement equipment: TurboMatrix HS 40 Headspace Autosampler produced by Perkin-Elmer
Heating temperature: 210°C
Heating time: 20 min
Pressurized gas pressure: 25 Psi
Pressurization time: 1 min
Needle temperature: 210°C
Transfer line temperature: 210°C
Sample introduction time: 0.08 min

Calculation conditions

Standard gas for calibration curve: mixed gas produced by GL Sciences, Inc.
Mixed gas content: i-butane (about 1 mass%), n-butane (about 1 mass%), nitrogen (balance)
Calculation method: The amount of gas remaining in the sample was calculated by the MHE method. All results were expressed in terms of i-butane.

Bulk Density

The bulk density was measured according to JIS K6911: 1995 "Testing methods for thermosetting plastics." Specifically, the measurement was performed using an apparent density meter according to JIS K6911, and the following formula was used for calculation.

Bulk density (g/cm$^3$) of foamed particles = [mass (g) of measuring cylinder containing sample - mass (g) of measuring cylinder]/[volume (cm$^3$) of measuring cylinder]

Crystallinity

The crystallinity of the foamed particles was measured by the methods described in JIS K7122: 1987 and JIS K7122: 2012. However, the sampling method and temperature conditions were carried out as follows. After an aluminum measuring container was filled with $5.5 \pm 0.5$ mg of sample so that there was no gap at the bottom, the container was covered with an aluminum lid. Then, differential scanning calorimetry was performed using a differential scanning calorimeter (DSC7000X, AS-3, produced by Hitachi High-Tech Science Co., Ltd.). Under a nitrogen gas flow rate of 20 mL/min, the sample was heated by the following steps to obtain a DSC curve.

(Step 1) Holding at 30°C for 2 minutes.
(Step 2) Heating at a rate of 10°C/min from 30°C to 290°C. Alumina was used as a reference material. The difference between the heat of fusion (J/g) obtained from the area of the melting peak and the heat of crystallization (J/g) obtained from the area of the crystallization peak was determined. A ratio obtained by dividing this difference by the theoretical heat of fusion of perfect crystalline polyethylene terephthalate 140.1 J/g was defined as crystallinity. The heat of fusion and the heat of crystallization were calculated using analysis software attached to the equipment. Specifically, the heat of fusion was calculated from the area of a portion surrounded by a straight line connecting a point at which the DSC curve departs from the low-temperature baseline and a point at which the DSC curve returns to the high-temperature baseline again, and the DSC curve. The heat of crystallization was calculated from the area of a portion surrounded by a straight line connecting a point at which the DSC curve departs from the low-temperature baseline and a point at which the DSC curve returns to the high-temperature side again, and the DSC curve. That is, the crystallinity was determined by the following formula.

Crystallinity (%) = [heat of fusion (J/g) - heat of crystallization (J/g)]/140.1 (J/g) $\times$ 100

Glass Transition Temperature (Tg)

The glass transition temperature of the foamed particles was measured by the methods described in JIS K7121: 1987 and JIS K7121: 2012. However, the sampling method and temperature conditions were carried out as follows. After an aluminum measuring container was filled with $5.5 \pm 0.5$ mg of sample so that there was no gap at the bottom, the container was covered with an aluminum lid. Then, differential scanning calorimetry was performed using a differential scanning calorimeter (DSC7000X, AS-3, produced by Hitachi High-Tech Science Co., Ltd.). Under a nitrogen gas flow rate of 20 mL/min, the sample was heated and cooled by the following steps to obtain a DSC curve.

(Step 1) Heating at a rate of 10°C/min from 30°C to 290°C, and holding for 10 minutes.
(Step 2) Taking out the sample quickly and leaving it to cool in an environment of $25 \pm 10$°C.
(Step 3) Heating at a rate of 10°C/min from 30°C to 290°C.

From the obtained DSC curve, the midpoint glass transition temperature observed during the second heating process was calculated using analysis software attached to the equipment. Alumina was used as a reference material in this step. The midpoint glass transition temperature was determined from these standards (Section 9.3).

Density of Foam Molded Product

The mass (a) and volume (b) of a rectangular parallelepiped test piece (e.g., 75 mm $\times$ 300 mm $\times$ 30 mm) cut out from a foam molded product (dried at 55°C for 20 hours or more after molding) were measured to three or more significant digits, and the density (g/cm$^3$) of the foam molded product was determined by the formula (a)/(b).

Heating Dimensional Change Rate

The heating dimensional change rate of the foam molded products was measured by Method B described in JIS K 6767: 1999 "Cellular plastics - Polyethylene - Methods of test." Specifically, a test piece (150 mm in length, 150 mm in width, and 30 mm in height) was cut out from the foam molded product.
On the surface of the test piece, three straight lines, each 50 mm long and oriented vertically, were drawn parallel to each other at 50 mm intervals, and three straight lines, each 50 mm long and oriented horizontally, were drawn parallel to each other at 50 mm intervals.
Thereafter, the test piece was heated in a hot air circulating dryer at 200°C for 120 minutes, then taken out and left at 25°C for 1 hour. Next, the lengths of the six straight lines drawn on the surface of the test piece were each measured, and the arithmetic mean value L1 of the lengths of the six straight lines was calculated. The degree of change S was calculated based on the following formula and taken as the heating dimensional change rate.

$$S\ (\%)\ =\ 100\ \times\ (L1{-}50)/50$$

Evaluation of Heating Dimensional Change Rate of Molded Product

The heating dimensional change rate of the molded products was evaluated according to the following criteria. If it fallen under C, the high-temperature resistance was evaluated as insufficient.

A: a dimensional change rate of more than -0.8% and less than 0.8%
B: a dimensional change rate of -1.3% or more and -0.8% or less, or 0.8% or more and 1.3% or less
C: a dimensional change rate of less than -1.3% or more than 1.3%

Bending Test: Maximum Bending Strength

The maximum bending strength (maximum point stress) was measured according to JIS K7221-1: 2006. Specifically, the maximum bending strength was measured by using a universal testing machine (Autograph AG-X plus 100kN, produced by Shimadzu Corporation) and universal testing machine data processing software (TRAPEZIUM X, produced by Shimadzu Corporation). A rectangular (25 mm in width, 130 mm in length, and 20 mm in thickness) was cut out from a foam molded product (dried at 55°C for 20 hours or more after molding) and used as a test piece. The number of test pieces was 5. The test pieces were conditioned for 16 hours under a class 2 standard atmosphere with the symbol "23/50" of JIS K 7100: 1999 (temperature: 23°C, relative humidity: 50%) and then used for the above measurement under the same standard atmosphere. The test speed was 10 mm/min. The radius of the tip of the pressure wedge and the supporting point was 5R, and the distance between the supporting points was 100 mm. From the graph obtained by measurement, a load region in which the inclination becomes maximum was set, and the apparent flexural modulus was determined by the universal testing machine data processing software. The point of intersection between the straight line of this modulus and the stroke was taken as the origin of elongation, and the corresponding maximum bending strength was automatically calculated.

Compression Test: 5% Compressive Strength

The 5% compressive strength was measured according to JIS K6767: 1999. Specifically, the 5% compressive strength was measured by using a universal testing machine (Autograph AG-X plus 100kN, produced by Shimadzu Corporation) and universal testing machine data processing software (TRAPEZIUM X, produced by Shimadzu Corporation). The size of the test piece was 50 mm $\times$ 50 mm $\times$ 25 mm in thickness, and the number of test pieces was 3. The test pieces were conditioned for 16 hours under a class 2 standard atmosphere with the symbol "23/50" of JIS K 7100: 1999 (temperature: 23°C, relative humidity: 50%) and then used for the above measurement under the same standard atmosphere. The compression speed was 2.5 mm/min. From the obtained graph, a load region in which the inclination becomes maximum was set, and the compressive modulus was determined by the universal testing machine data processing software. The point of intersection between the straight line of this modulus and the stroke was taken as the origin of elongation, and the compressive strength at 5% compression ratio was automatically calculated.

Evaluation of Mechanical Properties of Molded Products

The mechanical properties of the molded products were evaluated according to the following criteria. If it fell under C, the strength was evaluated as insufficient.

A: a maximum bending strength of 1.50 MPa or more and a 5% compressive strength of 1.00 MPa or more.
B: a maximum bending strength of 1.40 MPa or more and less than 1.50 MPa and a 5% compressive strength of 0.90 MPa or more, or a maximum bending strength of 1.50 MPa or more and a 5% compressive strength of 0.90 MPa or more and less than 1.00 MPa.
C: a maximum bending strength of less than 1.40 MPa or a 5% compressive strength of less than 0.90 MPa.

Comprehensive Evaluation of Molded Products

The molded products were comprehensively evaluated according to the following criteria.

A: The heating dimensional change rate and the mechanical properties are both rated A.
B: The heating dimensional change rate is rated A or B, and the mechanical properties are rated A or B. However, cases where both are rated A are excluded.
C: Either or both of the heating dimensional change rate and the mechanical properties are rated C.

Example 1

Foamed Particle Production Step

The production apparatus shown in Figs. 1 and 2 was used to produce foamed particles. First, an aromatic polyester-based resin composition containing 100 parts by mass of an aromatic polyester-based resin containing 95 mass% of plant-derived polyethylene terephthalate (intrinsic viscosity: 0.80, density: 1,400 kg/m$^3$, melting point: 247.2°C, glass transition temperature: 78.7°C, mass average molecular weight: 74,000, biobased product content: 30%) and 5 mass% of polyethylene naphthalate (density: 1,330 kg/m$^3$, melting point: 264.2°C, glass transition temperature: 119.8°C), 1.8 parts by mass of a master batch prepared by adding talc to polyethylene terephthalate (content of polyethylene terephthalate: 60 mass%, content of talc: 40 mass%, intrinsic viscosity of polyethylene terephthalate: 0.82), and 0.25 parts by mass of pyromellitic anhydride was supplied to a single-screw extruder having an opening diameter of 65 mm and an LID ratio of 34 and melt-kneaded at 300°C.

Next, carbon dioxide was injected as a foaming agent, in an amount of 0.34 parts by mass based on 100 parts by mass of the aromatic polyester-based resin (polyethylene naphthalate and polyethylene terephthalate), from a mid-section of the extruder into the molten aromatic polyester-based resin composition and was uniformly dispersed in the aromatic polyester-based resin composition.

Then, the molten aromatic polyester-based resin composition was cooled to 280°C at the front end portion of the extruder, and the cooled aromatic polyester-based resin composition was extrusion-foamed through the respective nozzles of the multi-nozzle die 1 attached to the front end of the extruder. The rate of extrusion of the aromatic polyester-based resin composition was 30 kg/h.

The multi-nozzle die 1 had 20 nozzles each having an outlet port 11 with a diameter of 1 mm, and all the outlet ports 11 of the nozzles were disposed at regular intervals on a virtual circle A assumed to be present on the front end face 1a of the multi-nozzle die 1 and having a diameter of 139.5 mm.

Two rotary blades 5 were disposed integrally with the outer circumferential surface of the rear end portion of the rotation shaft 2 with a phase difference of 180° in the circumferential direction of the rotation shaft 2. The respective rotary blades 5 were configured so as to move on the virtual circle A while being always in contact with the front end face 1a of the multi-nozzle die 1.

The cooling component 4 had a cooling drum 41 having a front section 41a with a circular front shape and a tubular circumferential wall section 41b extending rearward from the outer circumferential edge of the front section 41a and having an inner diameter of 320 mm. Cooling water 42 at 25°C was supplied to the cooling drum 41 through the supply tube 41d and the supply port 41c of the cooling drum 41. The volume of the cooling drum 41 was 17,684 cm$^3$.

The cooling water 42 flows forward while the cooling water 42 is caused to describe a helix along the inner circumferential surface of the circumferential wall section 41b of the cooling drum 41 by the centrifugal force caused by the flow rate of the cooling water 42 when it is supplied from the supply tube 41d to the inner circumferential surface of the circumferential wall section 41b of the cooling drum 41. While flowing along the inner circumferential surface of the circumferential wall section 41b, the cooling water 42 spread gradually in a direction perpendicular to its flowing direction, so that the portion of the inner circumferential surface of the circumferential wall section 41b that was frontward of the supply port 41c of the cooling drum 41 was entirely covered with the cooling water 42.

The rotary blades 5 disposed on the front end face 1a of the multi-nozzle die 1 were rotated at a rotation speed of 3,200 rpm, and the extrudates of the aromatic polyester-based resin extrusion-foamed through the outlet ports 11 of the respective nozzles of the multi-nozzle die 1 were cut by the rotary blades 5 to thereby produce substantially spherical particle-shaped cut products. The extrudates of the aromatic polyester-based resin had unfoamed portions formed immediately after extrusion from the nozzles of the multi-nozzle die 1 and foamed portions that were continuous with the unfoamed portions and were being foamed. The extrudates of the aromatic polyester-based resin were cut at the opening edges of the outlet ports 11 of the nozzles, and the cutting of the extrudates of the aromatic polyester-based resin was performed at their unfoamed portions.

To produce the foamed aromatic polyester-based resin particles, first, the rotation shaft 2 was not attached to the multi-nozzle die 1, and the cooling component 4 was evacuated from the multi-nozzle die 1. In this state, extrudates of the aromatic polyester-based resin were extrusion-foamed from the extruder to check that the extrudates of the aromatic polyester-based resin had unfoamed portions formed immediately after extrusion from the nozzles of the multi-nozzle die 1 and foamed portions that were continuous with the unfoamed portions and were being foamed. Then, the rotation shaft 2 was attached to the multi-nozzle die 1, and the cooling component 4 was disposed in a prescribed position. Then, the rotation shaft 2 was rotated to cut the extrudates of the aromatic polyester-based resin by the rotary blades 5 at the opening edges of the outlet ports 11 of the nozzles, whereby particle-shaped cut products were produced.

The cutting stress by the rotary blades 5 caused the particle-shaped cut products to fly outward or forward. Then, the particle-shaped cut products collided with the cooling water 42 flowing along the inner surface of the cooling drum 41 of the cooling component 4 in a direction oblique to the surface of the cooling water 42 so as to follow the cooling water 42 from the upstream side of the flow of the cooling water 42 toward the downstream side. The particle-shaped cut products then entered the cooling water 42 and were cooled immediately, whereby foamed aromatic polyester-based resin particles for in-mold foam molding were produced.

The obtained foamed aromatic polyester-based resin particles were discharged together with the cooling water 42 through the discharge port 41e of the cooling drum 41 and then separated from the cooling water 42 by a dewaterer.

Molding Step

After the obtained aromatic polyester-based resin particles were left to stand at 23°C and atmospheric pressure for 1 day immediately after production, the particles were sealed in a pressure container, and carbon dioxide was injected up to 0.2 MPa (gauge pressure) into the pressure container. The particles were left to stand at a temperature in the pressure container of 20°C, and pressure aging was performed for 24 hours. After the foamed aromatic polyester-based resin particles were taken out from the pressure container, the particles were placed in a molding die of 30 mm × 300 mm × 400 mm, heated with water vapor at 0.05 MPa for 180 seconds and water vapor at 0.10 MPa for 30 seconds, and then cooled until the maximum surface pressure of the foam molded product was reduced to 0.01 MPa, thereby obtaining a foam molded product.

Example 2

Foamed particles and a foam molded product were obtained in the same manner as in Example 1, except for using an aromatic polyester-based resin composition containing 100 parts by mass of an aromatic polyester-based resin containing 97 mass% of plant-derived polyethylene terephthalate (intrinsic viscosity: 0.80, density: 1,400 kg/m$^3$, melting point: 247.2°C, glass transition temperature: 78.7°C, mass average molecular weight: 74,000, biobased product content: 30%) and 3 mass% of polyethylene naphthalate (density: 1,330 kg/m$^3$, melting point: 264.2°C, glass transition temperature: 119.8°C), 1.8 parts by mass of a master batch prepared by adding talc to polyethylene terephthalate (content of polyethylene terephthalate: 60 mass%, content of talc: 40 mass%, intrinsic viscosity of polyethylene terephthalate: 0.82), and 0.24 parts by mass of pyromellitic anhydride.

Example 3

Foamed particles and a foam molded product were obtained in the same manner as in Example 1, except for using an aromatic polyester-based resin composition containing 100 parts by mass of an aromatic polyester-based resin containing 90 mass% of plant-derived polyethylene terephthalate (intrinsic viscosity: 0.80, density: 1,400 kg/m$^3$, melting point: 247.2°C, glass transition temperature: 78.7°C, mass average molecular weight: 74,000, biobased product content: 30%) and 10 mass% of polyethylene naphthalate (density: 1,330 kg/m$^3$, melting point: 264.2°C, glass transition temperature: 119.8°C), 1.8 parts by mass of a master batch prepared by adding talc to polyethylene terephthalate (content of polyethylene terephthalate: 60 mass%, content of talc: 40 mass%, intrinsic viscosity of polyethylene terephthalate: 0.82), and 0.27 parts by mass of pyromellitic anhydride.

Example 4

Foamed particles were obtained in the same manner as in Example 1, except that carbon dioxide in an amount of 0.28 parts by mass based on 100 parts by mass of the aromatic polyester-based resin, and butane including 35 mass% of isobutane and 65 mass% of n-butane in an amount of 0.2 parts by mass based on 100 parts by mass of the aromatic polyester-based resin, were injected as foaming agents from a mid-section of the extruder into the molten aromatic polyester-based resin composition and uniformly dispersed in the aromatic polyester-based resin composition.

Example 5

Foamed particles were obtained in the same manner as in Example 1, except that carbon dioxide in an amount of 0.22 parts by mass based on 100 parts by mass of the aromatic polyester-based resin, and butane including 35 mass% of isobutane and 65 mass% of n-butane in an amount of 0.4 parts by mass based on 100 parts by mass of the aromatic polyester-based resin, were injected as foaming agents from a mid-section of the extruder into the molten aromatic polyester-based resin composition and uniformly dispersed in the aromatic polyester-based resin composition.

Example 6

Foamed particles were obtained in the same manner as in Example 1, except that nitrogen in an amount of 0.22 parts by mass based on 100 parts by mass of the aromatic polyester-based resin was injected as a foaming agent from a mid-section of the extruder into the molten aromatic polyester-based resin composition and uniformly dispersed in the aromatic polyester-based resin composition.

Comparative Example 1

Foamed particles were obtained in the same manner as in Example 1, except that butane including 35 mass% of isobutane and 65 mass% of n-butane in an amount of 1.2 parts by mass based on 100 parts by mass of the aromatic polyester-based resin was injected as a foaming agent from a mid-section of the extruder into the molten aromatic polyester-based resin composition and uniformly dispersed in the aromatic polyester-based resin composition.

Comparative Example 2

Foamed particles and a foam molded product were obtained in the same manner as in Comparative Example 1, except for using an aromatic polyester-based resin composition containing 100 parts by mass of an aromatic polyester-based resin containing 90 mass% of plant-derived polyethylene terephthalate (intrinsic viscosity: 0.80, density: 1,400 kg/m$^3$, melting point: 247.2°C, glass transition temperature: 78.7°C, mass average molecular weight: 74,000, biobased product content: 30%) and 10 mass% of polyethylene naphthalate (density: 1,330 kg/m$^3$, melting point: 264.2°C, glass transition temperature: 119.8°C), 1.8 parts by mass of a master batch prepared by adding talc to polyethylene terephthalate (content of polyethylene terephthalate: 60 mass%, content of talc: 40 mass%, intrinsic viscosity of polyethylene terephthalate: 0.82), and 0.27 parts by mass of pyromellitic anhydride.

Comparative Example 3

Foamed particles and a foam molded product were obtained in the same manner as in Comparative Example 1, except for using a polyethylene terephthalate composition containing an aromatic polyester-based resin of 100 mass% of plant-derived polyethylene terephthalate (intrinsic viscosity: 0.80, density: 1,400 kg/m$^3$, melting point: 247.2°C, glass transition temperature: 78.7°C, mass average molecular weight: 74,000, biobased product content: 30%), 1.8 parts by mass of a master batch prepared by adding talc to polyethylene terephthalate (content of polyethylene terephthalate: 60 mass%, content of talc: 40 mass%, intrinsic viscosity of polyethylene terephthalate: 0.82), and 0.24 parts by mass of pyromellitic anhydride.

Comparative Example 4

Foamed particles and a foam molded product were obtained in the same manner as in Example 1, except for using a polyethylene terephthalate composition containing an aromatic polyester-based resin of 100 mass% of plant-derived polyethylene terephthalate (intrinsic viscosity: 0.80, density: 1,400 kg/m$^3$, melting point: 247.2°C, glass transition temperature: 78.7°C, mass average molecular weight: 74,000, biobased product content: 30%), 1.8 parts by mass of a master batch prepared by adding talc to polyethylene terephthalate (content of polyethylene terephthalate: 60 mass%, content of talc: 40 mass%, intrinsic viscosity of polyethylene terephthalate: 0.82), and 0.24 parts by mass of pyromellitic anhydride.

Comparative Example 5

Foamed particles and a foam molded product were obtained in the same manner as in Example 1, except for using an aromatic polyester-based resin composition containing 100 parts by mass of an aromatic polyester-based resin containing 85 mass% of plant-derived polyethylene terephthalate (intrinsic viscosity: 0.80, density: 1,400 kg/m$^3$, melting point: 247.2°C, glass transition temperature: 78.7°C, mass average molecular weight: 74,000, biobased product content: 30%) and 15 mass% of polyethylene naphthalate (density: 1,330 kg/m$^3$, melting point: 264.2°C, glass transition temperature: 119.8°C), 1.8 parts by mass of a master batch prepared by adding talc to polyethylene terephthalate (content of polyethylene terephthalate: 60 mass%, content of talc: 40 mass%, intrinsic viscosity of polyethylene terephthalate: 0.82), and 0.29 parts by mass of pyromellitic anhydride.

Comparative Example 6

Foamed particles were obtained in the same manner as in Example 1, except that carbon dioxide in an amount of 0.18 parts by mass based on 100 parts by mass of the aromatic polyester-based resin composition, and butane including 35 mass% of isobutane and 65 mass% of n-butane in an amount of 0.6 parts by mass based on 100 parts by mass of the aromatic polyester-based resin composition, were injected as foaming agents from a mid-section of the extruder into the molten aromatic polyester-based resin composition and uniformly dispersed in the aromatic polyester-based resin composition.
Tables 1 and 2 show physical properties etc. measured for the foamed particles and foam molded products obtained in the Examples and Comparative Examples.

Table 1

| | | | | Example | | | | | |
|---|---|---|---|---|---|---|---|---|---|
| | | | | 1 | 2 | 3 | 4 | 5 | 6 |
| Foamed particles | PET | | wt% | 95 | 97 | 90 | 95 | 95 | 95 |
| | PEN | | wt% | 5 | 3 | 10 | 5 | 5 | 5 |
| | Foaming agent | | | Carbon dioxide | Carbon dioxide | Carbon dioxide | Carbon dioxide butane | Carbon dioxide butane | Nitrogen |
| | Amount of inorganic gas added (during extrusion) | | phr | 0.34 | 0.34 | 0.34 | 0.28 | 0.22 | 0.22 |
| | Amount of butane added (during extrusion) | | phr | 0 | 0 | 0 | 0.2 | 0.4 | 0 |
| | Butane content | | wt% | 0.00 | 0.00 | 0.00 | 0.15 | 0.35 | 0.00 |
| | Bulk density | | g/L | 150 | 150 | 150 | 150 | 150 | 150 |
| | Thermal properties | Crystallinity | % | 2.6 | 3.4 | 2.2 | 2.9 | 3.6 | 2.5 |
| | | Tg | °C | 81.0 | 80.1 | 83.0 | 81.2 | 81.1 | 81.0 |

(continued)

| | | | | Example | | | | | |
|---|---|---|---|---|---|---|---|---|---|
| | | | | 1 | 2 | 3 | 4 | 5 | 6 |
| Molded product | Butane content | | wt% | 0.00 | 0.00 | 0.00 | 0.07 | 0.16 | 0.00 |
| | Density | | g/cm3 | 0.15 | 0.15 | 0.15 | 0.15 | 0.15 | 0.15 |
| | Heating dimensional change rate 200°C×120 min | | % | -0.5 | -0.6 | -0.8 | 0.3 | 0.8 | -0.7 |
| | Heating dimensional change rate evaluation | | | A | A | B | A | B | A |
| | Bending | Maximum point stress | MPa | 1.72 | 1.65 | 1.75 | 1.68 | 1.62 | 1.40 |
| | Compression | 5% compressive strength | MPa | 1.05 | 1.03 | 1.10 | 1.04 | 1.05 | 0.95 |
| | Mechanical property evaluation | | | A | A | A | A | A | B |
| | Comprehensive evaluation | | | A | A | B | A | B | B |

Table 2

| | | | | Comparative Example | | | | | |
|---|---|---|---|---|---|---|---|---|---|
| | | | | 1 | 2 | 3 | 4 | 5 | 6 |
| Foamed particles | PET | | wt% | 95 | 90 | 100 | 100 | 85 | 95 |
| | PEN | | wt% | 5 | 10 | 0 | 0 | 15 | 5 |
| | Foaming agent | | | Butane | Butane | Butane | Carbon dioxide | Carbon dioxide | Carbon dioxide butane |
| | Amount of inorganic gas added (during extrusion) | | phr | 0.00 | 0.00 | 0.00 | 0.34 | 0.34 | 0.18 |
| | Amount of butane added (during extrusion) | | phr | 1.2 | 1.2 | 1.2 | 0.00 | 0.00 | 0.6 |
| | Butane content | | wt% | 1.15 | 1.15 | 1.20 | 0.00 | 0.00 | 0.55 |
| | Bulk density | | g/L | 150 | 150 | 150 | 150 | 150 | 150 |
| | Thermal properties | Crystallinity | % | 4.3 | 2.8 | 60 | 3.1 | 1.8 | 3.9 |
| | | Tg | °C | 80.5 | 82.9 | 79.3 | 79.0 | 85.1 | 80.9 |
| Molded product | Butane content | | wt% | 0.57 | 0.57 | 0.59 | 0.00 | 0.00 | 0.27 |
| | Density | | g/cm3 | 0.15 | 0.15 | 0.15 | 0.15 | 0.15 | 0.15 |
| | Heating dimensional change rate 200°C×120 min | | % | 2.0 | 2.6 | 1.9 | -1.2 | -0.9 | 1.5 |
| | Heating dimensional change rate evaluation | | | C | C | C | C | B | C |
| | Bending | Maximum point stress | MPa | 1.54 | 1.64 | 1.43 | 1.22 | 1.18 | 1.59 |
| | Compression | 5% compressive strength | MPa | 106 | 1.01 | 100 | 0.75 | 0.78 | 1.04 |
| | Mechanical property evaluation | | | A | A | B | C | C | A |
| | Comprehensive evaluation | | | C | C | C | C | C | C |

The foam molded products obtained from the foamed particles of Examples 1 to 6 were rated B or higher for both of the heating dimensional change rate at 200°C and mechanical properties (bending properties and compressive properties). On the other hand, the foam molded products obtained from the foamed particles of Comparative Examples 1 to 6 were rated C for either or both of the heating dimensional change rate at 200°C and mechanical properties. The foam molded products obtained from the foamed particles of Examples 1 to 6 showed small dimensional changes even at a high temperature of 200°C and had excellent bending properties and compressive properties. These results demonstrate that the content of aliphatic hydrocarbon, such as butane, in the foamed particles is 0.50 mass% or less, and the aromatic polyester-based resin contains polyethylene terephthalate and PEN, whereby a foam molded product having a low aliphatic hydrocarbon content, a low heating dimensional change rate at a high temperature, and excellent mechanical properties can be obtained.

Example 7

Four sheets of fiber-reinforced plastic forming material (thickness: 0.22 mm, basis weight: 200 g/m$^2$, product name: "Pyrofil Cloth Prepreg TR3523 381GMP" produced by Mitsubishi Chemical Corporation, matrix resin: #261) were prepared, in which a reinforced fiber base material made of a twill fabric of carbon fiber was impregnated with 40% by weight of uncured epoxy resin. Then, the two sheets of fiber-reinforced plastic forming material were superimposed so that the cross angle between the longitudinal directions of the warp yarns of the reinforced fiber base material was 90°, and the superimposed portion of the two sheets of fiber-reinforced plastic forming material was cut into a flat rectangular shape of 300 mm length × 400 mm width to produce a laminated fiber-reinforced plastic forming material. Another sheet of laminated fiber-reinforced plastic forming material (skin material) was produced in the same manner.

A laminate was produced by laminating the laminated fiber-reinforced plastic forming material on both sides in the thickness direction of the foam molded product of Example 1, and a pressing force of 0.3 MPa was applied to the laminate in the thickness direction while the laminate was heated at 180°C for 30 minutes to cure the epoxy resin in the laminated fiber-reinforced plastic forming material as a binder. The fiber-reinforced plastic formed by curing the epoxy resin in the laminated fiber-reinforced plastic forming material was laminated and integrated with both sides of the foam molded product to obtain a fiber-reinforced composite.

When the obtained fiber-reinforced composite was visually observed, no irregularities were found on the surface. It was confirmed that the foam molded product showed little deformation even after being heated at a high temperature for lamination and integration, and that the foam molded product is suitable for compounding at high temperatures.

Reference Signs List

1. Nozzle die
2. Rotation shaft
3. Driving component
4. Cooling component
41. Cooling drum
42. Cooling water
5. Rotary blade
P. Foamed aromatic polyester-based resin particles

**Claims**

1. Foamed aromatic polyester-based resin particles comprising polyethylene naphthalate and polyethylene terephthalate, the foamed particles having a $C_{3-6}$ aliphatic hydrocarbon content of 0 mass% or more and 0.50 mass% or less, a polyethylene naphthalate content of 1 mass% or more and 10 mass% or less, and a polyethylene terephthalate content of 90 mass% or more and 99 mass% or less.

2. A foam molded product of the foamed aromatic polyester-based resin particles according to claim 1.

3. The foam molded product according to claim 2, wherein the foam molded product has a $C_{3-6}$ aliphatic hydrocarbon content of 0 mass% or more and 0.25 mass% or less.

4. The foam molded product according to claim 2 or 3, which has a dimensional change rate of -1.3% or more and 1.3% or less when left in an atmosphere at 200°C for 120 minutes.

5. A composite structural component comprising the foam molded product according to any one of claims 3 to 5.

6. An automobile component comprising the foam molded product according to any one of claims 2 to 4, or the composite structural component according to claim 5.

7. A method for producing the foamed aromatic polyester-based resin particles according to claim 1, the method comprising the steps of:

supplying an aromatic polyester-based resin material comprising polyethylene naphthalate and polyethylene terephthalate to an extruder, and melt-kneading the aromatic polyester-based resin material in the presence of a foaming agent to prepare a melt-kneaded product;
extrusion-foaming the melt-kneaded product to prepare an extruded foam; and
cutting the extruded foam to prepare foamed particles, wherein the foaming agent comprises an inorganic gas in an amount of 0.05 parts by mass or more and 0.50 parts by mass or less and $C_{3-6}$ aliphatic hydrocarbon in an amount of 0 parts by mass or more and 0.50 parts by mass or less based on 100 parts by mass of the aromatic polyester-based resin material.

8. The method for producing the foamed aromatic polyester-based resin particles according to claim 7, wherein the aromatic polyester-based resin material comprises 1 mass% or more and 10 mass% or less of polyethylene naphthalate and 90 mass% or more and 99 mass% or less of polyethylene terephthalate.

9. The method for producing the foamed aromatic polyester-based resin particles according to claim 7 or 8, wherein a cross-linking agent is further supplied in the step of preparing a melt-kneaded product.

10. A method for producing a foam molded product, the method comprising:

a filling step of filling a cavity of a mold with the foamed aromatic polyester-based resin particles according to claim 1; and
a foaming step of secondary-foaming the foamed aromatic polyester-based resin particles by heating to integrate the foamed particles with each other by heat-fusion, thereby preparing a foam molded product.

Fig. 1

Fig. 2

Fig. 3

## INTERNATIONAL SEARCH REPORT

| | International application No. |
|---|---|
| | **PCT/JP2023/002405** |

**A.    CLASSIFICATION OF SUBJECT MATTER**

*C08J 9/16*(2006.01)i; *C08J 3/24*(2006.01)i
FI:    C08J9/16 CFD; C08J3/24 Z

According to International Patent Classification (IPC) or to both national classification and IPC

**B.    FIELDS SEARCHED**

Minimum documentation searched (classification system followed by classification symbols)

C08J9/00 - 9/42, B29C44/00 - 44/60, B29C67/20, C08J3/00 - 3/28, C08J99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2015-098587 A (SEKISUI PLASTICS) 28 May 2015 (2015-05-28) | 1-6, 10 |
|   | claims, paragraphs [0043]-[0044], [0048]-[0049], [0069], examples | |
| A | | 7-9 |
| A | JP 2019-085517 A (JSP CORP) 06 June 2019 (2019-06-06) | 1-10 |
|   | entire text | |
| A | JP 004-203977 A (SEKISUI CHEM CO LTD) 22 July 2004 (2004-07-22) | 1-10 |
|   | entire text | |
| A | JP 2004-269583 A (IDEMITSU PETROCHEM CO LTD) 30 September 2004 (2004-09-30) | 1-10 |
|   | entire text | |
| A | WO 2019/187947 A1 (SEKISUI PLASTICS) 03 October 2019 (2019-10-03) | 1-10 |
|   | entire text | |
| A | WO 2013/031769 A1 (SEKISUI PLASTICS) 07 March 2013 (2013-03-07) | 1-10 |
|   | entire text | |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/002405** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2014-043528 A (SEKISUI PLASTICS) 13 March 2014 (2014-03-13)<br>    entire text | 1-10 |
| A | JP 2017-043011 A (SEKISUI PLASTICS) 02 March 2017 (2017-03-02)<br>    entire text | 1-10 |
| A | WO 2020/049802 A1 (JSP CORP) 12 March 2020 (2020-03-12)<br>    entire text | 1-10 |
| A | WO 2020/127757 A1 (DSM IP ASSETS B. V.) 25 June 2020 (2020-06-25)<br>    whole document | 1-10 |

Form PCT/ISA/210 (second sheet) (January 2015)

INTERNATIONAL SEARCH REPORT
Information on patent family members

International application No.

**PCT/JP2023/002405**

| Patent document cited in search report | | | Publication date (day/month/year) | Patent family member(s) | | | Publication date (day/month/year) |
|---|---|---|---|---|---|---|---|
| JP | 2015-098587 | A | 28 May 2015 | (Family: none) | | | |
| JP | 2019-085517 | A | 06 June 2019 | US 2020/0392302 A1 whole document WO 2019/093414 A1 whole document | | | |
| JP | 2004-203977 | A | 22 July 2004 | (Family: none) | | | |
| JP | 2004-269583 | A | 30 September 2004 | TW 200508299 A whole document | | | |
| WO | 2019/187947 | A1 | 03 October 2019 | TW 201942183 A whole document | | | |
| WO | 2013/031769 | A1 | 07 March 2013 | US 2014/0227506 A1 whole document | | | |
| JP | 2014-043528 | A | 13 March 2014 | (Family: none) | | | |
| JP | 2017-043011 | A | 02 March 2017 | (Family: none) | | | |
| WO | 2020/049802 | A1 | 12 March 2020 | US 2021/0189089 A1 whole document EP 3848408 A1 whole document | | | |
| WO | 2020/127757 | A1 | 25 June 2020 | US 2022/0073730 A1 whole document EP 3898798 A1 whole document | | | |

Form PCT/ISA/210 (patent family annex) (January 2015)

**EP 4 471 082 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014080022 A
- JP 2015098587 A